# EUROPEAN PATENT SPECIFICATION

(11) **EP 1 683 827 B1**
(45) Date of publication and mention of the grant of the patent: **14.12.2011**
(21) Application number: 05028270.6
(22) Date of filing: 22.12.2005
(51) Int. Cl.: C08J 9/08, C08J 9/10, C08J 9/06, C08J 9/00, C08L 23/16

(54) **Open-cell foam of ethylene-propylene-diene rubber**
Offenzelliger Schaumstoff aus Ehtylen-Propylen-Dienkautschuk
Mousse de caoutchouc ethylène-propylène-diène à pores ouverts.

(30) Priority: 24.12.2004 JP 2004374404
(43) Date of publication of application: 26.07.2006
(73) Proprietor: NITTO DENKO CORPORATION, Ibaraki-shi, Osaka 567-8680 (JP)
(72) Inventor: Kijima, Seiji, Ibaraki-shi Osaka 567-8680 (JP)
(74) Representative: Schwabe, Hans-Georg

(56) References cited:
- EP-A- 0 794 226
- US-A- 4 164 512
- US-A- 4 252 909
- PATENT ABSTRACTS OF JAPAN vol. 1998, no. 14, 31 December 1998 (1998-12-31) & JP 10 251428 A (SANWA KAKO CO LTD), 22 September 1998 (1998-09-22)

## Description

### BACKGROUND OF THE INVENTION

### Field of the Invention

The present invention relates to open-cell foam of ethylene-propylene-diene rubber and, more particularly, to open-cell foam for ethylene-propylene-diene rubber suitably used for sealing material of a variety of industrial products.

### Description of the Prior Art

EPDM foam obtained by foaming ethylene-propylene-diene rubber (hereinafter it is sometimes abbreviated into "EPDM") by a foaming agent is generally known as sealing materials for a variety of industrial products in terms of durability.

For example, azo compounds, such as azodicarbonamide (ADCA), and N-nitroso compounds, such as N,N'-dinitrosopentamethylene tetramine (DPT), are used as the foaming agent for foaming the EPDM (Cf. JP Laid-open (Unexamined) Patent Publication No. 2003-160685, for example).

The EPDM foam employing this foaming agent usually form closed cells. The closed-cell foams have high impact resiliency, so that when this EPDM foam is used as the sealing material, the closed cells are forcibly converted to the open cells by using rolls or needles, to reduce the impact resiliency.

The EPDM foam of forcibly converted open cells is substantially the foam of semi-closed and semi-open cell, but such foam has a high closed-cell ratio so that its impact resiliency cannot be reduced sufficiently. Due to this, when this EPDM foam is used as sealing material to be filled in a space, it sometimes falls in difficulties of filling up the space.

Also, this EPDM foam forms closed cell foams, first, and, then, the closed cell foams are converted to open cell foams. Due to this, when excess vulcanization takes place at the foaming of the EPDM, it becomes difficult to convert the closed cells to open cells so that the foams may be broken.

US 4,252,909 A discloses an expandable ethylene propylene diolefm copolymer composition. As blowing agent, blends of organic and inorganic compounds are indicated, but the respective percentages are missing. Urea or salicylic acids are also indicated as blowing promoters.

### SUMMARY OF THE INVENTION

It is an object of the present invention to provide open-cell foam of EPDM that can convert to open-cell foams at the foaming of EPDM, rather than after the foaming of the same, and can produce low impact resiliency and improved filling capability.

The present invention provides open-cell foam of ethylene-propylene-diene rubber comprising 0.1-40 parts by weight of organic foaming agent, 2-40 parts by weight of inorganic foaming agent, and 2-40 parts by weight of foam auxiliary agent, per 100 parts by weight of ethylene-propylene-diene rubber wherein the foam auxiliary agent is at least one material selected from the group consisting of urea compound, salicylic acid compound, and benzoic acid compound.

In the open-cell foam of ethylene-propylene-diene rubber, it is preferable that the organic foaming agent is an azo compound and/or an N-nitroso compound.

In the open-cell foam of ethylene-propylene-diene rubber, it is preferable that the organic foaming agent is azodicarbonamide and/or N,N'-dinitrosopentamethylenetetramine.

In the open-cell foam of ethylene-propylene-diene rubber, it is preferable that the inorganic foaming agent is hydrogen carbonate.

In the open-cell foam of ethylene-propylene-diene rubber, it is preferable that the inorganic foaming agent is sodium hydrogen carbonate.

In the open-cell foam of ethylene-propylene-diene rubber, it is preferable that the organic foaming agent is azodicarbonamide and/or N,N'-dinitrosopentamethylenetetramine, and the inorganic foaming agent is sodium hydrogen carbonate.

In the open-cell foam of ethylene-propylene-diene rubber, it is preferable that a mixing ratio of the organic foaming agent to the inorganic foaming agent (organic foaming agent/inorganic foaming agent) is in the range of 9/1 to 1/1 by weight.

The open-cell foam of EPDM of the present invention can be provided in a simple manner and at low cost, having low impact resilience and good sealing capability, so that it can be used as sealing materials of a variety of industrial products.

### DETAILED DESCRIPTION OF THE PREFERRED EMBODIMENTS

Open-cell foam of EPDM of the present invention contains 0.1-40 parts by weight of an organic foaming agent, 2-40 parts by weight of an inorganic foaming agent, and 2-40 parts by weight of a foam auxiliary agent, per 100 parts by weight of EPDM. Ethylene-propylene-diene rubber is a rubber produced by copolymerization of ethylene, propylene, and dienes. By copolymerizing dienes further with ethylene-propylene copolymer to introduce unsaturated bond, vulcanization by a vulcanizing agent is allowed.

The dienes used is not limited to any particular one. The dienes that may be used include, for example; 5-ethylidene-2-norbornene, 1,4-hexadiene, and dicyclopentadiene.

The organic foaming agent used is not limited to any particular one. The organic foaming agents that may be used include, for example, azo compounds, such as azodicarbonamide (ADCA), barium azodicarboxylate, azobisisobutyronitrile (AIBN), azocyclohexylnitrile, and azodiaminobenzene, N-nitroso compounds, such as N,N'-dinitrosopentamethylenetetramine (DPT), N,N'-dimethyl-N,N'-dinitrosoterephthalamide, and trinitrosotrimethyltriamine, hydrazide compounds, such as 4,4'-oxybis(benzenesulfonylhydrazide)(OBSH), paratoluene sulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide), semicarbazide compounds, such as p-toluilenesulfonylsemicarbazide, and 4,4'-oxybis(benzenesulfonylsemicarbazide), alkane fluorides, such as trichloromonofluoromethane, and dichloromonofluoromethane, and triazole compounds, such as 5-morpholyl-1,2,3,4-thiatriazole, and other known organic foaming agents. Preferably, azo compounds and N-nitroso compounds are used. Further preferably, azodicarbonamide (ADCA) and N,N'-dinitrosopentamethylenetetramine (DPT) are used.

Thermally expandable fine particles comprising thermally expandable material encapsulated in microcapsules may be used as the organic foaming agent. Commercially available products such as, for example, Microsphere® ((Trade name) available from Matsumoto Yushi-Seiyaku Co., Ltd.) may be used as the organic foaming agent.

The organic foaming agents cited above may be used singly or in combination of two or more.

No particular limitation is imposed on a mixing ratio of the organic foaming agent to EPDM. A mixing ratio of the organic foaming agent to EPDM is, for example, in the range of 0.1-40 parts by weight, or preferably 5-30 parts by weight, per 100 parts by weight of EPDM. When an azo compound is used as the organic foaming agent, the mixing ratio thereof is, for example, in the range of 5-40 parts by weight, or preferably 10-30 parts by weight, per 100 parts by weight of EPDM. When an N-nitroso compound is used as the organic foaming agent, the mixing ratio thereof is, for example, in the range of 0.1-40 parts by weight, or preferably 5-30 parts by weight, per 100 parts by weight of EPDM.

The inorganic foaming agent used is not limited to any particular one. The inorganic foaming agents that may be used include, for example, hydrogen carbonate, such as sodium hydrogen carbonate, and ammonium hydrogen carbonate, carbonate, such as sodium carbonate, and ammonium carbonate, nitrite, such as sodium nitrite, and ammonium nitrite, borohydride, such as sodium borohydride, and other known inorganic foaming agents, such as azides. Preferably, hydrogen carbonate is used. Further preferably, sodium hydrogen carbonate.

The inorganic foaming agents cited above may be used singly or in combination of two or more.

No particular limitation is imposed on a mixing ratio of the inorganic foaming agent to EPDM. A mixing ratio of the inorganic foaming agent to EPDM is, for example, in the range of 2-40 parts by weight, or preferably 2-20 parts by weight, per 100 parts by weight of EPDM.

No particular limitation is imposed on combination of the organic foaming agent and the inorganic compound. For example, combination of azodicarbonamide (ADCA) and N,N'-dinitrosopentamethylene tetramine (DPT) used as the organic foaming agent, and sodium hydrogen carbonate used as the inorganic foaming agent can be cited as a preferable combination used.

A mixing ratio of the organic foaming agent to the inorganic foaming agent (organic foaming agent/inorganic foaming agent) is, for example, in the range of 20/1 to 0.1/1, preferably 9/1 to 1/1, or further preferably 6/1 to 1/1, by weight. When the mixing ratio of organic foaming agent is above the mixing ratio specified above, the foams obtained result in closed cell foams, while on the other hand, when the mixing ratio of organic foaming agent is below the mixing ratio specified above, the foams may not be obtained due to outgassing.

The foam auxiliary agent used is not limited to any particular one as long as the foam auxiliary agents are selected from the group consisting of urea compounds, salicylic acid compounds, and benzoic acid compounds. These foam auxiliary agents may be used singly or in combination of two or more. The urea compound is preferably used from the viewpoints that it can lower a decomposition temperature (a foaming temperature) of the organic foaming agent effectively so that the two-stage foaming as mentioned later can be provided, and that it can obtain at low cost.

A mixing ratio of the foam auxiliary agent to EPDM is, for example, in the range of 2-40 parts by weight, or preferably 5-10 parts by weight, per 100 parts by weight of EPDM.

The mixture of this foam auxiliary agent can provide the result that it can lower a decomposition temperature (a foaming temperature) of the organic foaming agent at the foaming. This can allow the two-stage foaming that when foamed, the organic foaming agent is foamed first (primary foaming), and, then, the inorganic foaming agent is foamed (secondary foaming), and as such can allow the open-cell foam of EPDM thus obtained to have open-cell structure.

In addition, the open-cell foam of EPDM of the present invention can be produced by mixing filler, softener, vulcanizing agent, and vulcanization accelerator, together with the EPDM, organic foaming agent, inorganic agent, and foam auxiliary agent, and then vulcanizing and foaming them (vulcanizing foaming).

The filler used is not limited to any particular one. The fillers that may be used include, for example, inorganic fillers, such as calcium carbonate (e.g. calcium carbonate heavy), magnesium carbonate, calcium hydroxide, magnesium hydroxide, aluminum hydroxide, silicic acid and its salts, clay, talc, mica powder, bentonite, silica, alumina, aluminum silicate, acetylene black, and aluminum powder, organic fillers, such as cork, and other known fillers. These fillers may be used singly or in combination of two or more. Preferably, calcium carbonate is used. A mixing ratio of the filler to open-cell foam of EPDM is, for example, 300 parts by weight or less, or preferably 200 parts by weight or less, per 100 parts by weight of EPDM.

The softener used is not limited to any particular one. The softeners that may be used include, for example, drying oils and animal and vegetable oils (e.g. linseed oil), petroleum-derived oils (e.g. paraffinic process oil, naphthenic process oil, and aromatic process oil), asphalts, low-molecular polymers, organic esters (e.g. phthalic ester (e.g. di-2-ethylhexyl phthalate (DOP), dibutyl phthalate (DBP)), ester phosphate, higher fatty acid ester, and ester alkylsulfonate), and tackifier. These softeners may be used singly or in combination of two or more. Preferably, petroleum-derived oils and asphalts are used. When petroleum-derived oils and asphalts are used as the softener, excellent heat resistance and weather resistance can be given to the open-cell foams of EPDM obtained.

A mixing ratio of the softener to EPDM is, for example, in the range of 20-300 parts by weight, or preferably 50-200 parts by weight, per 100 parts by weight of EPDM. When the softener is used in this mixing ratio, there can be provided improved processing to produce flexible open-cell foam of EPDM.

The vulcanizing agent used is not limited to any particular one. The vulcanizing agents that may be used include, for example, sulfur, sulfur compounds (e.g. 4,4'-dithiomorpholine), selenium, magnesium oxide, lead monoxide, organic peroxides (e.g. cumene peroxide), polyamines, oximes (e.g. p-quinonedioxime, p,p'-dibenzoylquinondioxime, etc.) nitroso compounds (e.g. p-dinitrosobenzene), resins (e.g. alkylphenol-formaldehyde resin, melamine-formaldehyde condensate, etc.), and ammonium salts (e.g. ammonium benzoate). These vulcanizing agents may be used singly or in combination of two or more. Sulfur is preferably used in terms of properties, such as, for example, durability, resulting from vulcanization of open-cell foam of EPDM obtained. Vulcanizing efficiencies vary depending on the type of the vulcanizing agent used, so a mixing ratio of vulcanizing agent can be properly selected. For example when sulfur is used as the vulcanizing agent, a mixing ratio of sulfur to EPDM is, for example, in the range of 0.1-10 parts by weight, or preferably 0.5-3 parts by weight, per 100 parts by weight of EPDM.

The vulcanization accelerators that may be used include, for example, thiazoles (e.g. 2-mercaptobenzothiazole, dibenzothiazyl disulfide, etc.), dithiocarbamic acids (e.g. sodium dimethyldithiocarbamate, sodium diethyldithiocarbamate, zinc dimethyldithiocarbamate, zinc diethyldithiocarbamate, etc.), guanidines (e.g. diphenylguanidine, di-o-tolylguanidine, etc.), sulfenamides (e.g. benzothiazyl-2-diethylsulfenamide, N-cyclohexyl-2-benzothiazyl sulfenamide, etc.), thiurams (e.g. tetramethylthiurammonosulfide, tetramethylthiuramdisulfide, etc.), xanthogenate (e.g. sodium isopropylxanthogenate, zinc isopropylxanthogenate, etc.), aldehyde ammonias (e.g. acetaldehyde ammonia, hexamethylenetetramine, etc.), aldehyde amines (e.g. n-butylaldehydeanilline, butylaldehydemonobutylamine, etc.), and thioureas (e.g. diethylthiourea, trimethylthiourea, etc.). These vulcanization accelerators may be used singly or in combination of two or more. Dithiocarbamic acids are preferably used in terms of vulcanizing speed and others.

A mixing ratio of the vulcanization accelerator to EPDM is, for example, in the range of 0.5-10 parts by weight, or preferably 1-5 parts by weight, per 100 parts by weight of EPDM in terms of bloom resistance, vulcanizing speed, and so on.

On the other hand, rather than the vulcanization accelerators, vulcanization retardants such as, for example, organic acids (e.g. phthalic anhydride, benzoic acid, salicylic acid, etc.) and amines (e.g. N-nitroso-diphenylamine, N-nitroso-phenyl-β-naphthylamine, etc.), may be properly mixed, for the purpose of molding control.

According to open-cell foam of EPDM of the present invention, known additives including, for example, stiffener, vulcanizing auxiliary agent, and lubricant, and, if required, for example, plasticizer, rubber antioxidant, antioxidant, pigment, colorant, fungicide, and flame retardant, may be additionally mixed properly for intended purposes and applications, within the range of having little influence on the physical property of the open-cell foam of EPDM obtained.

The stiffener used is not limited to any particular one. For example, carbon black is preferably used. A mixing ratio of the stiffener to EPDM is, for example, in the range of 0.1-80 parts by weight, or preferably 0.5-50 parts by weight, per 100 parts by weight of EPDM.

The vulcanizing auxiliary agent used is not limited to any particular one. For example, zinc oxide is preferably used. A mixing ratio of the vulcanizing auxiliary agent to EPDM is, for example, in the range of 1-20 parts by weight, or preferably 2-10 parts by weight, per 100 parts by weight of EPDM.

The lubricant used is not limited to any particular one. For example, stearic acid and esters thereof is preferably used. A mixing ratio of the lubricant to EPDM is, for example, in the range of 0.5-5 parts by weight, or preferably 1-3 parts by weight, per 100 parts by weight of EPDM.

The open-cell foam of EPDM to be vulcanized and foamed is produced in the following manner, for example. First, EPDM, the filler, the softener and the known additives are properly selected and mixed at a mixing ratio mentioned above. Then, the mixture is kneaded using a kneader, a mixer, a mixing roll, and the like; to prepare intimate mixture. The mixture may be properly heated during the kneading.

Then, after the vulcanizing agent, the organic foaming agent, the inorganic foaming agent, the vulcanization accelerator, and the foam auxiliary agent are further mixed in the intimate mixture in the proper manner, the mixture is further kneaded using the mixing roll and then heated.

To be more specific, a known method may be used for the vulcanizing foaming, without any particular limitation. For example, the intimate mixture may be formed in sheet form by calendaring or extrusion molding, for the vulcanizing foaming, or may be formed in complicated form, such as patterned indented form, by injection molding or press molding, for the vulcanizing foaming.

Heating temperature in the vulcanizing foaming is properly selected according to the vulcanization initiating temperature of the vulcanizing agent mixed and the foam initiating temperature of the foaming agent mixed. For example, the heating temperature in the vulcanizing foaming is 450°C or less, preferably 100-350°C, or further preferably 120-250°C.

As a result of this vulcanizing foaming, the intimate mixture is softened and, while the organic foaming agent and the inorganic foaming agent are expanded to form the foam structure, vulcanization progresses to form the target open-cell foam of EPDM.

Also, by setting the heating temperature to the temperature mentioned above, the two-stage foaming can be provided in the vulcanizing foaming, such that the organic foaming agent is foamed, first (primary foaming), and, then, the inorganic foaming agent is foamed (secondary foaming) at a higher temperature than in the primary foaming.

In this vulcanizing foaming, the vulcanization and the foaming may be performed sequentially under different temperatures or may be performed under pressure, for the purpose of adjusting the foam ratio.

In this vulcanizing foaming, the foam ratio of the open-cell foam of EPDM obtained (the density ratio of the foam before foamed to the foam after foamed) is set to be in the range of ten times to thirty times, or preferably ten times to twenty times. By setting the foam ratio to be in the range of ten times to thirty times, good sealing property can be developed and moderate flexibility can be obtained. The foam ratio can be adjusted by adjusting the mixing ratio of the organic foaming agent and inorganic foaming agent, and the vulcanizing foaming time and temperature.

Since the open-cell foam of EPDM of the present invention thus obtained comprises the organic foaming agent, the inorganic foaming agent, and the foam auxiliary agent mixed at the mixed ratio specified above, it can be allowed to have the cell structure of open-cell foam having softness, low impact resilience, and excellent sealing performance.

Hence, when the open-cell foam of EPDM of the present invention is used as the sealing material, it can ensure the good foam filling even for an object to be sealed of large in area, low in strength, or small in space, for which the sealing material must be reduced in impact resilience when filled, while preventing displacement of the sealing material, thus developing good sealing performance.

In addition, since the open-cell foam of EPDM of the present invention converts directly to the open-cell at the same time as the foaming, without any need to forcibly convert the closed-cell to the open-cell by using rolls or needles after vulcanizing foaming, the manufacturing process or the manufacturing equipment can be simplified, thus providing the open-cell foam of EPDM in a simple way and at low cost.

Hence, the open-cell foam of EPDM of the present invention can be suitably used as the sealing members of a variety of products of various industrial fields including, for example, automobiles, electric and electronic products, and housing products, to seal up spaces between members or parts of those products, including, for example, exterior sealing material of automobiles, sealing material of electric and electronic products, and sealing material of housings, in the form of dust-proof material, heat insulating material, noise insulation material, vibration-proof material, cushioning material, sealing material, and water shutoff material, for the purposes of dust proof, heat insulation, noise reduction, damping, shock-absorbing, and water and air tight.

The term "vulcanization" or equivalent used in the description above is substantially synonymous with "cross-linking" in the broad sense of the term, without being limited to the cross-linking using the sulfur in the narrow sense of the term.

### Examples

While in the following, the present invention will be described in further detail with reference to Examples and Comparative Example, the present invention is not limited thereto.

### 1) Preparation of Examples and Comparative Example

### Example 1

In the prescription shown in TABLE 1, 100 parts by weight of EPDM (Trade name "EPT4021" avalable from Mitsui Chemicals, a diene content of 8.0% (5-ethylidene-2-norbornene), a ethylene content of 51%), 100 parts by weight of calcium carbonate heavy (Trade name "Ground Calcium Carbonate" available from Maruo calcium Co., Ltd.), 40 parts by weight of paraffinic process oil (Trade name "Diana Process PW-90" available from Idemitsu Kosan Co., Ltd.), 50 parts by weight of asphalt (Trade name "Blown asphalt" available from Nippon Oil Corporation), 10 parts by weight of carbon black (Trade name "Asahi #50" available from Asahi Carbon Co., Ltd.), 5 parts by weight of zinc oxide (Trade name "Zinc Oxide 2" available from Mitsui Kinzoku), and 3 parts by weight of stearic acid (Trade name "Stearic Acid Powder" available from NOF Corporation) were mixed. Then, after the mixture was kneaded by a Banbury mixer, it was scoured by a mixing roll and then sheet-extruded. The intimate mixture A was prepared in the manner mentioned above.

Then, 1 part by weight of sulfur (Trade name "sulfur flour" available from Hosoi Kagaku Kogyo K.K.), 25 parts by weight of azodicarbonamide (Trade name "VINYFOR AC#LQ" available from Eiwa Chemical Ind. Co., Ltd.), 3 parts by weight of sodium hydrogen carbonate (Trade name "FE**·**507" available from Eiwa Chemical Ind. Co., Ltd.), 10 parts by weight of urea foam auxiliary agent (Trade name "CELLPASTE-K5 available from Eiwa Chemical Ind. Co., Ltd.), 1 part by weight of dithiocarbamate vulcanization accelerator (Trade name "Nocceler PZ" available from OUCHISHINKO CHEMICAL INDUSTRIAL CO., LTD.), and 1 part by weight of dithiocarbamate vulcanization accelerator (Trade name "Nocceler M" available from OUCHISHINKO CHEMICAL INDUSTRIAL CO., LTD.) were mixed in 100 parts by weight of the intimate mixture A and the mixture was further kneaded by the mixing roll, to thereby prepare the intimate mixture B.

Thereafter, the intimate mixture B was extruded into sheet of 4.5mm thick and 150mm wide, using a vented uniaxial extruder of 45mmϕ. After the sheet was preheated for fifteen minutes at 100°C in the drying machine, the drying machine was raised to 160°C, taking fifteen minutes. Then, the intimate mixture B was heated for five minutes at 160°C and thereby vulcanized and foamed to thereby produce open-cell foam of EPDM of a foam ratio of 15.

### Example 2

Except that 25 parts by weight of azodicarbonamide (Trade name "VINYFOR AC#LQ" available from Eiwa Chemical Ind. Co., Ltd.) was changed to 20 parts by weight of the same, that 3 parts by weight of sodium hydrogen carbonate (Trade name "FE-507" available from Eiwa Chemical Ind. Co., Ltd.) was changed to 15 parts by weight of the same, and that 10 parts by weight of urea foam auxiliary agent (Trade name "CELLPASTE-K5 available from Eiwa Chemical Ind. Co., Ltd.) was changed to 7 parts by weight of the same, the same operations as those of Example 1 were performed to obtain the open-cell foam of EPDM of the foam ratio of 10.

### Example 3

Except that 25 parts by weight of azodicarbonamide (Trade name "VINYFOR AC#LQ" available from Eiwa Chemical Ind. Co., Ltd.) was changed to 20 parts by weight of the mixture (Cellular CK#54, Mixture at a mixing ratio of 1/1(by weight) (Foaming agent/Foam auxiliary agent) of N,N'-dinitrosopentamethylenetetramine and urea, that 3 parts by weight of sodium hydrogen carbonate (Trade name "FE-507" available from Eiwa Chemical Ind. Co., Ltd.) was changed to 5 parts by weight of the same, and that the urea foam auxiliary agent (Trade name "CELLPASTE-K5 available from Eiwa Chemical Ind. Co., Ltd.) was not added, the same operations as those of Example 1 were performed to obtain the open-cell foam of EPDM of the foam ratio of 15.

### Comparative Example 1

Except that 25 parts by weight of azodicarbonamide (Trade name "VINYFOR AC#LQ" available from Eiwa Chemical Ind. Co., Ltd.) was changed to 20 parts by weight of the same, and that the sodium hydrogen carbonate (Trade name "FE-507" available from Eiwa Chemical Ind. Co., Ltd.) was not added, the same operations as those of Example 1 were performed to obtain the open-cell foam of EPDM of the foam ratio of 15. 2) Measurement of Impact Resiliency

The impact resiliencies of the open-cell foams of EPDM of Examples and Comparative Example were measured in conformity with Compression Test of JIS K 6767. The results are shown in TABLE 1.

It can be seen from TABLE 1 that the open-cell foams of EPDM of Examples 1 to 3 have lower impact resiliency than the open-cell foam of EPDM of Comparative Example 1.

While the illustrative embodiments of the present invention are provided in the above description, such is for illustrative purpose only and it is not to be construed restrictively. Modification and variation of the present invention that will be obvious to those skilled in the art is to be covered by the following claims.

**TABLE 1**

| Composition of Open-cell foam of EPDM (parts by weight) | | Ex. 1 | Ex. 2 | Ex. 3 | Comp. Ex. 1 |
|---|---|---|---|---|---|
| Loading prescription | EPDM | 100 | 100 | 100 | 100 |
| | Calcium carbonate heavy | 100 | 100 | 100 | 100 |
| | Paraffinic process oil | 40 | 40 | 40 | 40 |
| | Asphalt | 50 | 50 | 50 | 50 |
| | Carbon black | 10 | 10 | 10 | 10 |
| | Zinc oxide | 5 | 5 | 5 | 5 |
| | Stearic acid | 3 | 3 | 3 | 3 |
| | Sulfur | 1 | 1 | 1 | 1 |
| | Azodicarbonamide | 25 | 20 | 0 | 20 |
| | Cellular CK#54 * | 0 | 0 | 20 | 0 |
| | Sodium hydrogen carbonate | 3 | 15 | 5 | 0 |
| | Urea foam auxiliary agent CELLPASTE-K5 | 10 | 7 | 0 | 10 |
| | Dithiocarbamine acids vulcanization accelerator Nocceler PZ | 1 | 1 | 1 | 1 |
| | Dithiocarbamine acids vulcanization accelerator Nocceler M | 1 | 1 | 1 | 1 |
| Physical properties | Foam ratio (times) | 15 | 10 | 15 | 15 |
| | 50% compression (N/cm²) | 0.4 | 0.2 | 0.5 | 5 |

| | | | | | |
|---|---|---|---|---|---|
| Cellular CK#54 * (forming agent) : Mixture at a mixing ratio of 1/1(by weight) (Foaming agent/Foam auxiliary agent) | | | | | |

## Claims

1. Open-cell foam of ethylene-propylene-diene rubber comprising 0.1-40 parts by weight of organic foaming agent, 2-40 parts by weight of inorganic foaming agent, and 2-40 parts by weight of foam auxiliary agent, per 100 parts by weight ethylene-propylene-diene rubber wherein the foam auxiliary agent is at least one material selected from the group consisting of urea compound, salicylic acid compound, and benzoic acid compound.

2. The open-cell foam of ethylene-propylene-diene rubber according to Claim 1, wherein the organic foaming agent is an azo compound and/or an N-nitroso compound.

3. The open-cell foam of ethylene-propylene-diene rubber according to Claim 2, wherein the organic foaming agent is azodicarbonamide and/or N,N'-dinitrosopentamethylenetetramine.

4. The open-cell foam of ethylene-propylene-diene rubber according to Claim 1, wherein the inorganic foaming agent is hydrogen carbonate.

5. The open-cell foam of ethylene-propylene-diene rubber according to Claim 4, wherein the inorganic foaming agent is sodium hydrogen carbonate.

6. The open-cell foam of ethylene-propylene-diene rubber according to Claim 1, wherein the organic foaming agent is azodicarbonamide and/or N,N'-dinitrosopentamethylenetetramine, and the inorganic foaming agent is sodium hydrogen carbonate.

7. The open-cell foam of ethylene-propylene-diene rubber according to Claim 1, wherein a mixing ratio of the organic foaming agent to the inorganic foaming agent is in the range of 9/1 to 1/1 by weight.

## Patentansprüche

1. Offenzelliger Schaumstoff aus Ethylen-Propylen-Dienkautschuk, umfassend 0,1 bis 40 Gewichtsteile organischen Schaumbildner, 2 bis 40 Gewichtsteile anorganischen Schaumbildner und 2 bis 40 Gewichtsteile Hilfsschaumbildner pro 100 Gewichtsteile Ethylen-Propylen-Dienkautschuk, wobei der Hilfsschaumbildner mindestens ein Material ist, welches aus der Gruppe ausgewählt ist, die aus Harnstoffverbindung, Salicylsäureverbindung und Benzoesäureverbindung besteht.

2. Offenzelliger Schaumstoff aus Ethylen-Propylen-Dienkautschuk gemäß Anspruch 1, wobei der organische Schaumbildner eine Azoverbindung und/oder eine N-Nitrosoverbindung ist.

3. Offenzelliger Schaumstoff aus Ethylen-Propylen-Dienkautschuk gemäß Anspruch 2, wobei der organische Schaumbildner Azodicarbonamid und/oder N,N'-Dinitrosopentamethylentetramin ist.

4. Offenzelliger Schaumstoff aus Ethylen-Propylen-Dienkautschuk gemäß Anspruch 1, wobei der anorganische Schaumbildner Hydrogencarbonat ist.

5. Offenzelliger Schaumstoff aus Ethylen-Propylen-Dienkautschuk gemäß Anspruch 4, wobei der anorganische Schaumbildner Natriumhydrogencarbonat ist.

6. Offenzelliger Schaumstoff aus Ethylen-Propylen-Dienkautschuk gemäß Anspruch 1, wobei der organische Schaumbildner Azodicarbonamid und/oder N,N'-Dinitrosopentamethylentetramin ist und der anorganische Schaumbildner Natriumhydrogencarbonat ist.

7. Offenzelliger Schaumstoff aus Ethylen-Propylen-Dienkautschuk gemäß Anspruch 1, wobei ein Mischungsverhältnis des organischen Schaumbildners zu dem anorganischen Schaumbildner im Bereich von 9/1 bis 1/1, bezogen auf das Gewicht, liegt.

## Revendications

1. Mousse à alvéoles ouverts en caoutchouc éthylène-propylène-diène, comprenant 0,1-40 parties en poids d'un agent moussant organique, 2-40 parties en poids d'un agent moussant inorganique, et 2-40 parties en poids d'un agent auxiliaire de mousse, par 100 parties en poids de caoutchouc éthylène-propylène-diène, où l'agent auxiliaire de mousse est au moins un matériau choisi parmi le groupe consistant en un composé urée, un composé acide salicylique, et un composé acide benzoïque.

2. Mousse à alvéoles ouverts en caoutchouc éthylène-propylène-diène selon la revendication 1, où l'agent moussant organique est un composé azo et/ou un composé N-nitroso.

3. Mousse à alvéoles ouverts en caoutchouc éthylène-propylène-diène selon la revendication 2, où l'agent moussant organique est l'azodicarbonamide et/ou la N,N'-dinitrosopentaméthylènetétramine.

4. Mousse à alvéoles ouverts en caoutchouc éthylène-propylène-diène selon la revendication 1, où l'agent moussant inorganique est un hydrogénocarbonate.

5. Mousse à alvéoles ouverts en caoutchouc éthylène-propylène-diène selon la revendication 4, où l'agent moussant inorganique est l'hydrogénocarbonate de sodium.

6. Mousse à alvéoles ouverts en caoutchouc éthylène-propylène-diène selon la revendication 1, où l'agent moussant organique est l'azodicarbonamide et/ou la N,N'-dinitrosopentaméthylènetétramine, et l'agent moussant inorganique est l'hydrogénocarbonate de sodium.

7. Mousse à alvéoles ouverts en caoutchouc éthylène-propylène-diène selon la revendication 1, où le rapport de mélange de l'agent moussant organique à l'agent moussant inorganique se situe dans l'intervalle allant de 9/1 à 1/1 en poids.
